# EUROPÄISCHE PATENTSCHRIFT

(11) **EP 4 065 856 B1**
(45) Veröffentlichungstag und Bekanntmachung des Hinweises auf die Patenterteilung: **27.09.2023**
(21) Anmeldenummer: 20803742.4
(22) Anmeldetag: 28.10.2020
(51) Int. Cl.: F16D 27/115

(54) **MAGNETKUPPLUNG MIT EINER ROTATIONSACHSE ZUM BETÄTIGEN EINER TRENNKUPPLUNG**
MAGNETIC CLUTCH WITH AN AXIS OF ROTATION FOR ACTUATING A DISCONNECT CLUTCH
EMBRAYAGE MAGNÉTIQUE AVEC UN AXE DE ROTATION POUR ACTIONNER UN EMBRAYAGE DE COUPURE

(30) Priorität: 28.11.2019 DE 102019132229
(43) Veröffentlichungstag der Anmeldung: 05.10.2022
(73) Patentinhaber: Schaeffler Technologies AG & Co. KG, 91074 Herzogenaurach (DE)
(72) Erfinder: RABER, Christoph, 66564 Ottweiler-Steinbach (DE); FINKENZELLER, Marc, 77723 Gengenbach (DE); HUBER, Patrick, 77704 Oberkirch (DE); MELISCHKO, Dominic, 67850 Herrlisheim (FR); BOHNEN, Jens, 77709 Wolfach (DE)
(86) Internationale Anmeldenummer: PCT/DE2020/100921
(87) Internationale Veröffentlichungsnummer: WO 2021/104560

(56) Entgegenhaltungen:
- DE-A1-102014 216 345
- DE-B3-102015 209 791
- JP-A- S58 146 723

## Beschreibung

Die Erfindung betrifft eine Magnetkupplung mit einer Rotationsachse zum Betätigen einer Trennkupplung, eine Trennkupplung mit einer solchen Magnetkupplung für eine Verbrennungskraftmaschine in einem Hybrid-Antriebsstrang, einen Hybrid-Antriebsstrang mit einer solchen Trennkupplung, ein Kraftfahrzeug mit einem solchen Hybrid-Antriebsstrang, sowie ein Schließverfahren zum gesteuerten Schließen einer Trennkupplung.

Mit der zunehmenden Elektrifizierung von Antriebsträngen, beispielsweise im Bereich der Hybrid-Kraftfahrzeuge, wird ein rein elektrisches Fahren als Hauptzustand für innerstädtische Geschwindigkeiten (beispielsweise bis 50 km/h [fünfzig Kilometer pro Stunde]) gefordert. Es lassen sich selbst bei einer geringeren Leistung der elektrischen Antriebsmaschine die elektrischen Fahrfunktionen Kriechen, Rangieren und aktives Segeln, also Halten einer momentanen Fahrzeuggeschwindigkeit, realisieren. Bei geringer Versorgerspannung ist teilweise das System für Beschleunigungsvorgänge und Anfahrvorgänge nur eingeschränkt nutzbar. Der Motorwiederstart der Verbrennungskraftmaschine über die elektrische Antriebsmaschine kann sehr dynamisch und komfortabel dargestellt werden und ist damit gegenüber einem konventionellen Start-Stopp-System deutlich verbessert. Eine Einschränkung ergibt sich bei elektrischer Fahrt mit gleichzeitigem Motorwiederstart bei geringer Leistung der elektrischen Antriebsmaschine. Es existiert ein Zielkonflikt zwischen der Momentenverteilung für die Traktion (in Richtung Abtrieb) und dem Wiederstart (in Richtung Verbrennungskraftmaschine). Auf Basis der gewählten Betriebsstrategie ergeben sich daher die Anforderungen an das Trennkupplungssystem und das gegebenenfalls erforderliche Zusatzstartsystem.

Für den Wiederstart der Verbrennungskraftmaschine ist eine Trennkupplung vorgesehen, welche oftmals als K0-Kupplung bezeichnet wird. Eine solche K0-Kupplung hat bezüglich ihrer Regelbarkeit und ihrer Funktionswerte andere Vorgaben zu erfüllen, als vorbekannte Anfahrkupplungen, beispielsweise in einem reinen Verbrenner-Antriebsstrang. In diesem Zusammenhang wurde bereits ein Kupplungssystem erdacht, welches als Vorsteuerkupplung eine Magnetkupplung verwendet. Eine solche Trennkupplung ist in der ATZ elektronik Ausgabe 2/2016 Seite 64 und Folgende im Artikel 48-V-Hybridmodule - Mehr als ein Einstieg in die Elektrifizierung unter der Rubrik Entwicklung E /E im Antriebsstrang veröffentlicht.

Eine weitere Magnetkupplung für Hybrid-Kraftfahrzeuge ist aus der Druckschrift DE 10 2015 209791 B3 bekannt. Andere Magnetkupplungen sind aus den Druckschriften DE 10 2014 216345 A1 und JP S58 146723 A bekannt.

Nachteilig bei diesem Konzept ist, dass die Magnetkupplung mit einem Axialspalt zwischen Ankerplatte (Anker) und verbrennerseitigem Drehübertrager (Stator) ausgeführt werden muss, welcher für die Freistellung von einem Schleppmoment der Vorsteuerkupplung notwendig ist. Aufgrund der quadratischen Kraftabnahme mit dem magnetischen Stellweg muss der Axialspalt mit einer ein sehr geringen axialen Ausdehnung vorgehalten werden.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft eine Magnetkupplung mit einer Rotationsachse zum Betätigen einer Trennkupplung, aufweisend zumindest die folgenden Komponenten:
- einen axial fixierten Stator;
- einen axial bewegbaren Anker, wobei mittels einer Magnetkraft infolge eines Leistungsbestromens der Anker axial an dem Stator haltbar ist; und
- einen Drehmoment-Axialkraft-Wandler mit einer Ankerseite und mit einer Lagerseite antagonistisch zu der Magnetkraft wirkend, mittels welcher der Anker von dem Stator axial beabstandet gehalten ist,

Die Magnetkupplung ist vor allem dadurch gekennzeichnet, dass weiterhin eine rotatorische Bremse vorgesehen ist, mittels welcher eine Drehzahldifferenz zwischen der Ankerseite und der Lagerseite des Drehmoment-Axialkraft-Wandlers bewirkbar ist.

Es wird im Folgenden auf die genannte Rotationsachse Bezug genommen, wenn ohne explizit anderen Hinweis die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Die hier vorgeschlagene Magnetkupplung ist als Vorsteuerkupplung für eine Trennkupplung eingerichtet, bevorzugt für einen Hybrid-Antriebsstrang, beispielsweise für ein Kraftfahrzeug. Mittels der Magnetkupplung ist ein Vorsteuerdrehmoment in eine axiale Betätigungskraft, beispielsweise Anpresskraft, für eine Hauptkupplung schaltbar erzeugbar, sodass ein zu übertragendes Drehmoment für den Hybrid-Antriebsstrang (zumindest hauptsächlich) über die Hauptkupplung übertragbar ist. Die Hauptkupplung ist beispielsweise eine konventionelle Reibkupplung oder eine sogenannte Wedge-Clutch (in einem geringen Differenzdrehzahlbereich schlupfend betreibbare Formschluss-Kupplung). Die Magnetkupplung ist um eine Rotationsachse rotierbar, wobei der Stator und der Anker im geschlossenen Zustand der Trennkupplung mit der anliegenden Drehzahl mitdrehen. Der Stator ist axial fixiert und bewirkt bei einer entsprechenden Leistungsbestromung eine axiale Magnetkraft auf den Anker, sodass der Anker von dieser Magnetkraft gegen den axial fixierten Stator gezogen gehalten wird. Bevorzugt ist der Stator mit einer Spule ausgeführt und der Anker als passives, beispielsweise ferromagnetisches, Element ausgeführt. Weiterhin ist ein Drehmoment-Axialkraft-Wandler vorgesehen, beispielsweise umfassend zumindest eine Blattfeder, Schraubenfeder und/oder eine Rampe, welche der Magnetkraft entgegenwirkend (bevorzugt vorgespannt) angeordnet ist. Mittels des Drehmoment-Axialkraft-Wandlers ist der Anker von dem Stator mit einem gewünschten Axialspalt, beispielsweise um die Magnetkupplung schleppmomentfrei zu halten, beabstandet gehalten. Der Drehmoment-Axialkraft-Wandler weist eine Ankerseite auf, welche dem Anker zugeordnet ist und mittelbar oder unmittelbar mit dem Anker verbunden ist. Axial gegenüberliegend weist der Drehmoment-Axialkraft-Wandler eine Lagerseite auf, welche beispielsweise im Einsatz in einem Hybrid-Antriebsstrang der elektrischen Antriebsmaschine zugeordnet ist. Die Lagerseite rotiert somit mit der elektrischen Antriebsmaschine (beziehungsweise deren Rotor) mit und die Ankerseite mit der Verbrennungskraftmaschine (beziehungsweise deren Verbrennerwelle) mit. Bei geschlossener Trennkupplung und/oder geschlossener Magnetkupplung laufen die Ankerseite und die Lagerseite synchron.

Hier ist nun vorgeschlagen, dass zusätzlich eine rotatorische Bremse vorgesehen ist, wobei die Bremse dazu eingerichtet ist, eine Differenzdrehzahl zwischen der Ankerseite und der Lagerseite des Drehmoment-Axialkraft-Wandlers mittels Bremswirkung, also eine Relativdrehzahl über dem Drehmoment-Axialkraft-Wandler, zu bewirken. Die rotatorische Bremse ist gegen eine Rotationsbewegung fixiert, bevorzugt an einem stehenden Gehäuse fixiert, beispielsweise an dem Motorgehäuse der elektrischen Antriebsmaschine, an einer Kupplungsglocke und/oder an dem Motorblock der Verbrennungskraftmaschine. Wenn also die rotatorische Bremse geschlossen wird und eine Drehzahl an der Lagerseite anliegt und keine Drehzahl an der Ankerseite, wenn also beispielsweise eine angeschlossene Verbrennerwelle steht, wird eine Differenzdrehzahl zwischen der Lagerseite und der Ankerseite bewirkt und dem Drehmoment-Axialkraft-Wandler wird infolge der Differenzdrehzahl entgegen seiner Vorspannung zum Bereithalten des Axialspalts zwischen dem Anker und dem Stator eine den Axialspalt verkleinernde Axialbewegung aufgezwungen. Beispielsweise bei einem als Druckfeder ausgeführten Drehmoment-Axialkraft-Wandler wird infolge der von der Differenzdrehzahl bedingten Torsion der Drehmoment-Axialkraft-Wandler axial aufgestellt. Bei einer Ausführungsform des Drehmoment-Axialkraft-Wandlers als Zugfeder wird der Drehmoment-Axialkraft-Wandler infolge der Torsion axial zusammengezogen. Somit ist der Axialspalt mittels der rotatorischen Bremse steuerbar verkleinerbar und vergrößerbar, wobei bevorzugt dafür keine Magnetkraft benötigt wird. Ein Schließen oder zumindest Verkleinern des Axialspalts mittels der rotatorischen Bremse hat zudem den Vorteil, dass für das Überwinden des Axialspalts, wofür bei vorbekannten Lösungen ohne rotatorischen Bremse also aufgrund der quadratischen Abhängigkeit zu der Größe des Axialspalts eine große Magnetkraft notwendig ist, keine solch große Magnetkraft benötigt ist und damit der Stator und Anker geringer dimensioniert auslegbar sind und/oder mit einer geringeren Leistungsbestromung betätigbar sind. Beispielsweise ist eine Magnetkraft ausreichend, welche den Anker bei überwundenem (also geschlossenen) Axialspalt axial an dem Stator hält. Besonders bevorzugt ist der Axialspalt axial länger als für ein rein magnetisches Schließen zulässig beziehungsweise als eine Spaltbreite, über welche eine ausreichende Magnetkraft erzeugbar ist. Beispielsweise ist der Axialspalt größer/gleich 1 mm [größer/gleich ein Millimeter]. In einer bevorzugten Ausführungsform ist während des Schließens des Axialspalts (mittels der Bremse) keine oder nur eine geringe Magnetkraft erzeugt, wobei diese derart gering ist, dass ein Drehmoment über die Hauptkupplung von einer Minimalkraft bis zu einer Maximalkraft sanft aufbaubar ist (vergleiche dazu unten).

Es wird weiterhin in einer vorteilhaften Ausführungsform der Magnetkupplung vorgeschlagen, dass die rotatorische Bremse ein Schlingband umfasst, wobei bevorzugt das Schlingband unmittelbar mit dem Anker reibschlüssig drehmomentübertragend verbindbar ist.

Bei dieser Ausführungsform umfasst die rotatorische Bremse ein Schlingband, welches bevorzugt einfach oder mehrfach um das zu bremsende ankerseitige Bauteil gewickelt ist. Das Schlingband ist bevorzugt an dem einen Ende fixiert und an dem anderen Ende ist ein Aktor, bevorzugt ein Linearmotor, vorgesehen, wobei aufgrund der Seilzugwirkung (nach der Euler-Eytelwein-Formel) des Schlingbands nur geringe Stellkräfte für den Aktor notwendig sind. Damit ergibt sich eine einfache Regelbarkeit für die Drehzahldifferenz zwischen der Lagerseite und der Ankerseite des Drehmoment-Axialkraft-Wandlers und zugleich wird nur eine geringe, bevorzugt elektrische, Energie zum Betätigen des Aktors benötigt. Zudem ist die Regelbarkeit deutlich schneller als infolge der Magnetkraft, welche trägheitsbedingt (Induktion) nur langsam wieder abbaubar ist. Ein Schließen des Axialspalts ist also im Verlauf wieder abbrechbar, wenn eine Situation dies erfordert (beispielsweise in einem Hybrid-Antriebsstrang eines Kraftfahrzeugs plötzliches Abbremsen aus einer angeforderten schnellen Beschleunigung heraus). Alternativ für eine einfache Schaltelektronik ist die Bremse rein binär betreibbar, also zwischen offen (kein Bremsmoment) und geschlossen (das maximal erforderliche Bremsmoment zum Schließen des Axialspalts), wobei der geschlossene Zustand der Bremse bevorzugt einzig für einen vorbestimmten maximalen Zeitraum haltbar ist und/oder die Leistungsbestromung der Spule der Magnetkupplung auslöst beziehungsweise auslösbar schaltet. Auch dann ist wie oben beschrieben ein Schließvorgang des Axialspalts im Verlauf abbrechbar, allerdings zurück auf (vollständig) offen. In einer bevorzugten Ausführungsform wirkt das Schlingband unmittelbar mit dem Anker reibschlüssig zusammen, sodass der Anker selbst mittels des Schlingbands gegenüber der Lagerseite, beispielsweise einem (mit der elektrische Antriebsmaschine) mitrotierenden Kupplungsdeckel, rotatorisch abgebremst wird.

Gemäß einem weiteren Aspekt wird eine Trennkupplung für eine Verbrennungskraftmaschine in einem Hybrid-Antriebsstrang vorgeschlagen, aufweisend zumindest die folgenden Komponenten:
- eine Hauptkupplung zum trennbaren Übertragen eines vorbestimmten Soll-Drehmoments;
- eine Magnetkupplung nach einer Ausführungsform gemäß der obigen Beschreibung zum steuerbaren Übertragen eines Vorsteuerdrehmoments für die Hauptkupplung; und
- ein Rampensystem zum Umwandeln des Vorsteuerdrehmoments in eine axiale Betätigungskraft,
wobei mittels der Betätigungskraft des Rampensystems die Hauptkupplung schließbar ist.

Hier ist nun eine Trennkupplung vorgeschlagen, welche in einem Hybrid-Antriebsstrang zwischen einer Verbrennungskraftmaschine und einer elektrischen Antriebsmaschine angeordnet ist, beispielsweise angeordnet in konventioneller Weise als K0-Kupplung. Beispielsweise umfasst die Trennkupplung einen mitrotierenden Kupplungsdeckel, an welchem der Antriebsrotor (Rotorwelle) einer elektrischen Antriebsmaschine dauerhaft drehmomentübertragend angreift und ein entsprechender Antriebsstator radial außerhalb angeordnet ist. Alternativ ist ein solcher mitrotierender Kupplungsdeckel zugleich eine Zugmittelscheibe, beispielsweise für eine parallel angeordnete elektrische Antriebsmaschine drehmomentübertragend verbunden mittels eines Riementriebs. In einer alternativen Ausführungsform ist der Kupplungsdeckel verbrennerseitig angeschlossen und eine Zentralwelle ist mit der elektrischen Antriebsmaschine verbunden. Die Hauptkupplung ist dazu eingerichtet, ein vorbestimmtes Soll-Drehmoment entsprechend der gewünschten Leistung der Verbrennungskraftmaschine zu übertragen. Die Hauptkupplung ist dafür mittels der Magnetkupplung, welche als Vorsteuerkupplung eingerichtet ist, betätigbar. Das Vorsteuerdrehmoment wird (zumindest zu einem Teil) an das Rampensystem übergeben, wobei dort das Vorsteuerdrehmoment in eine axiale Betätigungskraft umgewandelt wird, mittels welcher die Hauptkupplung ausreichend stark verpressbar ist, um das vorbestimmte Soll-Drehmoment zu übertragen. Zumindest bei Anliegen des maximalen Vorsteuerdrehmoments ist die Hauptkupplung dann mittels des Rampensystems derart geschlossen, dass das vorbestimmte Soll-Drehmoment übertragbar ist. Die Hauptkupplung ist schlupfend betreibbar, bevorzugt ausgeführt als Reibkupplung, sodass das übertragbare Drehmoment von der elektrischen Antriebsmaschine auf die Verbrennungskraftmaschine steuerbar ist. Dieser schlupfende Betrieb ist vor allem dadurch erleichtert regelbar, dass die Bremse zum Schließen des Axialspalts zwischen dem Anker und dem Stator der Magnetkupplung vorgesehen ist. Damit ist es nicht notwendig, zum Schließen des Axialspalts nicht die (oftmals maximale) Magnetkraft zu erzeugen, welche trägheitsbedingt unmittelbar nach dem Schließen des Axialspalts nicht ausreichend schnell wieder abbaubar ist. Damit liegt konventionell gleich ein sehr hohes Vorsteuerdrehmoment an und die Hauptkupplung wird schnell, in einigen Fällen unsanft, geschlossen. Wird die Magnetkraft allerdings erst nach dem Verkleinern des Axialspalts, bevorzugt nach dem vollständigen Schließen des Axialspalts zugeschaltet, so ist die Magnetkraft beliebig sanft von einer Minimalkraft bis zu einer Maximalkraft zum Übertragen des gewünschten Soll-Drehmoments steigerbar. Die Minimalkraft ist beispielsweise gerade ausreichend, um den Anker an dem Stator der Magnetkupplung zu halten. Damit ist darüber hinaus, dass (optional) der Axialspalt mittels Bremsmoment regelbar verringerbar ist, die Hauptkupplung nun regelbar im Schlupf betreibbar, indem die Magnetkupplung proportional zu der gewünschten Betätigungskraft, beispielsweise Anpresskraft, beziehungsweise zu dem Einrückweg leistungsbestrombar ist.

Es wird weiterhin in einer vorteilhaften Ausführungsform der Trennkupplung vorgeschlagen, dass die Hauptkupplung ein Reibpaket umfasst, welches gemäß einer der folgenden Konfigurationen ausgeführt ist:
- als ein Lamellenpaket, bevorzugt mit dem Rampensystem als unmittelbar auf das Lamellenpaket einwirkendes Anpressmittel;
- als ein Mehrscheibenpaket, bevorzugt mit dem Rampensystem als unmittelbar auf das Mehrscheibenpaket einwirkendes Anpressmittel; und
- als ein Einscheibenpaket, bevorzugt mit einer Betätigungsfeder zwischen dem Rampensystem und dem Einscheibenpaket.

Hier ist vorgeschlagen, dass die Hauptkupplung ein Reibpaket umfasst, wobei das Reibpaket als Lamellenpaket, also mit einer Mehrzahl von Eingangslamellen und antagonistischen Ausgangslamellen ausgeführt ist, welche bevorzugt in einem entsprechenden Eingangskorb beziehungsweise Ausgangskorb eingehängt sind. In einer bevorzugten Ausführungsform wirkt das Rampensystem als Anpressmittel, beispielsweise entsprechend einer Anpressplatte, unmittelbar, beispielsweise mit einem reibpaketseitigen Rampenelement, auf das Lamellenpaket. Alternativ ist beispielsweise ein Hebel, beispielsweise eine Hebelfeder wie beispielsweise eine Membranfeder, und/oder ein Zugtopf beziehungsweise Drucktopf zwischengeschaltet.

In einer anderen Ausführungsform ist das Reibpaket als Mehrscheibenpaket ausgeführt, wobei zumindest eine Zwischenplatte vorgesehen ist, welche in Ihrer Funktion einer Anpressplatte ähnelt, jedoch zwischen zwei Reibscheiben angeordnet ist und dazu beidseitig mit Reibflächen versehen ist. Wie eine Anpressplatte ist die Zwischenscheibe axial verschiebbar. In einer bevorzugten Ausführungsform ist die Anpressplatte des Mehrscheibenpakets unmittelbar von dem Rampensystem, beispielsweise einem reibpaketseitigen Rampenelement, gebildet. Alternativ ist eine separate Anpressplatte und/oder ein Hebel, beispielsweise eine Hebelfeder wie beispielsweise eine Membranfeder, und/oder ein Zugtopf beziehungsweise Drucktopf zwischengeschaltet.

In einer anderen Ausführungsform ist das Reibpaket als Einscheibenpaket ausgeführt, wobei also eine axial zentrale Reibscheibe vorgesehen ist, welche zwischen einer Anpressplatte und einer Gegenplatte verpressbar ist. In einer bevorzugten Ausführungsform ist eine Betätigungsfeder, beispielsweise eine Membranfeder, zwischen dem Rampensystem und dem Einscheibenpaket, bevorzugt unmittelbar auf eine Anpressplatte wirkend, vorgesehen.

In einer bevorzugten Ausführungsform weist die Trennkupplung einen mitrotierenden Kupplungsdeckel auf, und die Platten (Anpressplatte, Zwischenplatte und/oder Gegenplatte) des Reibpakets, ausgeführt als Einscheibenpaket oder Mehrscheibenpaket, sind dauerhaft mitrotierend mit dem mitrotierenden Kupplungsdeckel eingerichtet. Das bedeutet, dass die Platten bei einer anliegenden Drehzahl an dem Rotor mit der elektrischen Antriebsmaschine mitrotieren.

Gemäß einem weiteren Aspekt wird ein Hybrid-Antriebsstrang vorgeschlagen, aufweisend zumindest die folgenden Komponenten:
- eine Verbrennungskraftmaschine mit einer Verbrennerwelle;
- eine elektrische Antriebsmaschine mit einer Rotorwelle;
- ein Getriebe zum drehmomentübertragenden Verbinden der Verbrennerwelle und/oder der Rotorwelle mit einem Verbraucher;
- eine Trennkupplung nach einer Ausführungsform gemäß der obigen Beschreibung,
wobei die Trennkupplung zwischen der Rotorwelle und der Verbrennerwelle angeordnet ist und die Verbrennungskraftmaschine über die Trennkupplung von der elektrischen Antriebsmaschine anlassbar ist.

Der hier vorgeschlagene Hybrid-Antriebsstrang umfasst eine Trennkupplung in einer Ausführungsform gemäß der obigen Beschreibung, wobei die Ausgangsseite mittels eines Getriebes mit einem Verbraucher verbunden ist, sodass von der Trennkupplung ein Drehmoment, sei es von der elektrische Antriebsmaschine oder von der Verbrennungskraftmaschine, mittels des Getriebes an zumindest einen Verbraucher übertragbar ist. Bevorzugt bilden die elektrische Antriebsmaschine und die Trennkupplung eine vormontierbare Baueinheit, welche als Hybridmodul bezeichnet werden kann. Die elektrische Antriebsmaschine ist bevorzugt ein koaxialer oder parallel angeordneter Motorgenerator. Mittels der Trennkupplung ist schaltbar die Rotorwelle und die Verbrennerwelle, beispielsweise zum Anlassen der Verbrennungskraftmaschine, verbindbar. Die Trennkupplung beziehungsweise die Hauptkupplung ist dabei mittels der rotatorischen Bremse einfach regelbar schlupfend verbindbar, sodass ein Zuschalten der Verbrennungskraftmaschine sehr sanft durchführbar ist. Die Trennkupplung ist bevorzugt in einem Bauraum unterbringbar, welcher konventionell für eine solche Trennkupplung zur Verfügung gestellt ist. Es sei an dieser Stelle darauf hingewiesen, dass in einer Ausführungsform die Rotorwelle einstückig von einem mitrotierenden Kupplungsdeckel gebildet ist, wobei dann bevorzugt der Kupplungsdeckel eine Nabe, beispielsweise eine Steckverzahnung, zum Anschließen einer Getriebeeingangswelle umfasst. Alternativ ist die Rotorwelle von einer Zentralwelle gebildet und die Verbrennerwelle mit dem Kupplungsdeckel dauerhaft drehmomentübertragend verbunden. Die Zentralwelle ist dann zum Anschließen mit einer Getriebeeingangswelle eingerichtet.

Das Getriebe umfasst beispielsweise ein Übersetzungsgetriebe, sodass die erforderliche Drehzahl beziehungsweise das gewünschte Drehmoment automatisch oder manuell anpassbar ist. In einer bevorzugten Ausführungsform ist das Übersetzungsgetriebe ein kontinuierlich veränderbar übersetzendes Umschlingungsgetriebe (beispielsweise ein sogenanntes CVT [engl.: continuous variable transmission]), beispielsweise mit einem Zugmittel oder mit einem Schubgliederband.

Gemäß einem weiteren Aspekt wird ein Kraftfahrzeug vorgeschlagen, aufweisend zumindest ein Vortriebsrad zum Vortrieb des Kraftfahrzeugs und
einen Hybrid-Antriebsstrang nach einer Ausführungsform gemäß der obigen Beschreibung,
wobei das zumindest eine Vortriebsrad mittels des Hybrid-Antriebsstrangs mit einem Drehmoment zum Vortrieb des Kraftfahrzeugs steuerbar versorgbar ist.

Der axiale und/oder radiale Bauraum ist gerade bei hybridisierten Kraftfahrzeugen aufgrund der hohen Anzahl von Antriebskomponenten besonders gering und es ist daher besonders vorteilhaft, einen Hybrid-Antriebsstrang kleiner Baugröße zu verwenden. Dies ist dadurch erreichbar, dass die Trennkupplung bezogen auf das maximal übertragbare Drehmoment mit einem geringen Bauraum ausführbar ist. Zugleich ist mit der hier vorgeschlagenen Trennkupplung auch unmittelbar nach dem Engagieren des Reibpakets eine Regelbarkeit eines schlupfenden Betriebs der Hauptkupplung geschaffen.

Verschärft wird die Bauraum-Problematik bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Bei dem hier vorgeschlagenen (hybridisierten) Kraftfahrzeug mit dem oben beschriebenen Hybrid-Antriebsstrang wird bevorzugt trotz des wesentlichen Funktionszugewinns kein zusätzlicher Bauraum benötigt.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Alfa Romeo MiTo, Volkswagen Polo, Ford Ka+ oder Renault Clio. Bekannte Voll Hybride in der Kleinwagenklasse sind der BMW i3 oder der Toyota Yaris Hybrid.

Gemäß einem weiteren Aspekt wird ein Schließverfahren zum gesteuerten Schließen einer Trennkupplung nach einer Ausführungsform gemäß der obigen Beschreibung vorgeschlagen, das Schließverfahren umfassend zumindest die folgenden Schritte in der genannten Reihenfolge:
**a.** Schließen der rotatorischen Bremse, sodass ein relatives Verdrehen zwischen der Ankerseite und der Lagerseite des Drehmoment-Axialkraft-Wandlers bewirkt ist und damit eine Axialbewegung des Drehmoment-Axialkraft-Wandlers;
**b.** Leistungsbestromen der Magnetkupplung zum Erzeugen der Magnetkraft, bevorzugt nach einem vollständigen Schließen des Axialspalts mittels der rotatorischen Bremse gemäß Schritt **a.**;
**c.** nach Schritt **b.,** Öffnen der rotatorischen Bremse und Halten des Ankers an dem Stator mittels der Magnetkraft,
wobei bevorzugt die Magnetkraft zwischen einer rein haltenden Minimalkraft und einer dem Soll-Drehmoment entsprechenden Maximalkraft derart regelbar ist, dass die Hauptkupplung schlupfend betreibbar ist.

Hier ist ein Schließverfahren für eine Trennkupplung mit einer Magnetkupplung als Vorsteuerkupplung vorgeschlagen, wobei die Magnetkupplung eine rotatorische Bremse umfasst. In einem Schritt **a.,** beispielsweise zum Anlassen der Verbrennungskraftmaschine mittels der (rotierenden) elektrischen Antriebsmaschine, wird die rotatorische Bremse geschlossen, sodass ein relatives Verdrehen zwischen der Ankerseite und der Lagerseite des Drehmoment-Axialkraft-Wandlers bewirkt wird und damit dem Drehmoment-Axialkraft-Wandler entgegen seiner antagonistischen Kraft zum Vorhalten des (maximalen) Axialspalts zwischen dem Anker und dem Stator eine derartige Axialbewegung aufgezwungen wird, dass damit der Axialspalt verkleinert wird, bis bevorzugt vollständig geschlossen wird. Hieraus resultiert, dass der Axialspalt ohne oder mit weniger (lediglich unterstützender) Magnetkraft schließbar ist. Es ist nicht notwendig eine hohe oder sogar die Maximalkraft, oder sogar eine über einer Dauerbelastbarkeit liegende Kurzzeit-Maximalkraft, mittels der Spule der Magnetkupplung zu erzeugen, um den Axialspalt (magnetisch) zu schließen. Vielmehr ist der Axialspalt (bevorzugt einzig) mittels des Bremsmoments der Bremse vollständig schließbar. Die Magnetkupplung beziehungsweise deren Spule wird in Schritt **b.,** bevorzugt erst nach dem vollständigen Schließen des Axialspalts gemäß Schritt **a.,** leistungsbestromt. Sobald die so erzeugte Magnetkraft ausreichend ist, um den Axialspalt geschlossen zu halten, also den Anker axial an dem Stator zu halten, ist mit Schritt **c.** die Bremse wieder abschaltbar, also öffenbar. Nun ist es möglich (in einem optionalen Schritt **d.**) die Leistungsbestromung der Spule der Magnetkupplung weiter zu steigern und damit das Vorsteuerdrehmoment, und damit wiederum die Betätigungskraft auf das Reibpaket zu steigern, wobei dies bevorzugt proportional zu dem Stromfluss in der Spule der Magnetkupplung ist. Damit ist (bei geschlossenem Axialspalt jederzeit) ein schlupfender Betrieb der Hauptkupplung ermöglicht.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine erste Ausführungsform einer Trennkupplung mit aktivierter Bremse in Ansicht von der Anschlussseite einer Verbrennungskraftmaschine;
- Fig. 2:: die Trennkupplung gemäß Fig. 1 mit deaktivierter Bremse und offener Magnetkupplung im Vollschnitt;
- Fig. 3:: die Trennkupplung gemäß Fig. 1 mit geschlossener Bremse und geschlossenem Axialspalt im Vollschnitt;
- Fig. 4:: die Trennkupplung gemäß Fig. 1 mit offener Bremse und geschlossener Magnetkupplung im Vollschnitt;
- Fig. 5:: die Trennkupplung in einer zweiten Ausführungsform im deaktivierten Zustand gemäß Fig. 2 im Vollschnitt;
- Fig. 6:: die Trennkupplung gemäß Fig. 5 im gebremsten Zustand gemäß Fig. 3 im Vollschnitt;
- Fig. 7:: die Trennkupplung gemäß Fig. 5 im aktivierten Zustand gemäß Fig. 4 im Vollschnitt;
- Fig. 8:: die Trennkupplung in einer dritten Ausführungsform im deaktivierten Zustand gemäß Fig. 2 im Vollschnitt;
- Fig. 9:: die Trennkupplung gemäß Fig. 8 im gebremsten Zustand gemäß Fig. 3 im Vollschnitt;
- Fig. 10:: die Trennkupplung gemäß Fig. 5 im aktivierten Zustand gemäß Fig. 4 im Vollschnitt;
- Fig. 11:: ein Flussdiagramm einer Ausführungsform eines Schließverfahrens; und
- Fig. 12:: ein Kraftfahrzeug mit einem Hybrid-Antriebsstrang.

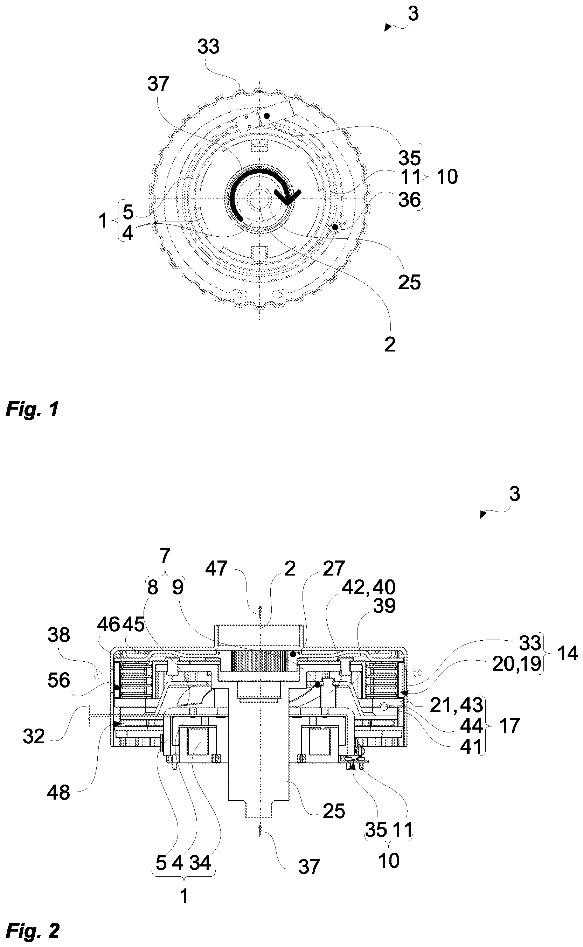

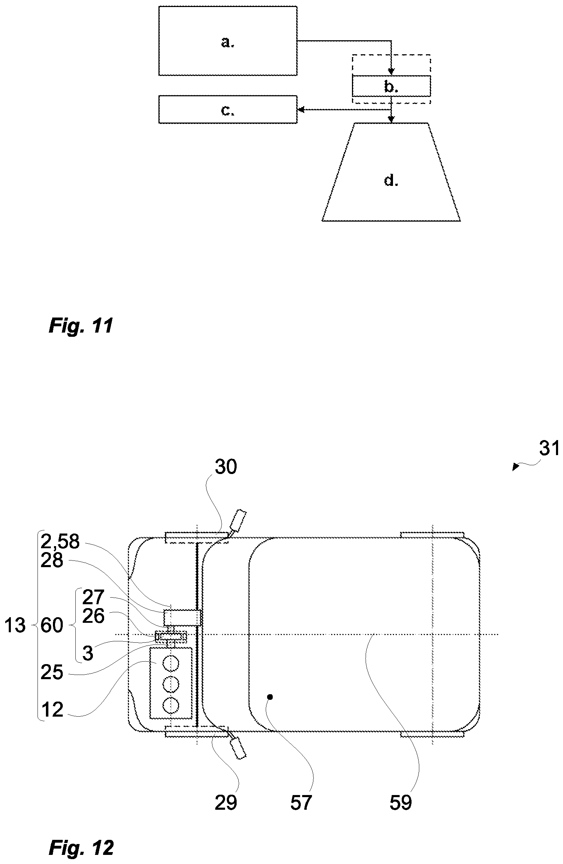

In Fig. 1 ist eine erste Ausführungsform der Trennkupplung **3** in Ansicht von der Anschlussseite einer Verbrennungskraftmaschine **12** (hier nicht dargestellt, vergleiche Fig. 12) gezeigt. Diese Ausführungsform ist von Fig. 2 bis Fig. 4 in einer seitlichen Schnittansicht in drei verschiedenen Zuständen dargestellt. Die Trennkupplung **3** weist einen mitrotierenden Kupplungsdeckel **33** auf und ist koaxial zu einer Rotationsachse **2** ausgerichtet. Ein Anker **5,** ein Stator **4** und eine Magnetspule **34** (vergleiche Fig. 2) sind Bestandteile einer Magnetkupplung **1.** Der Stator **4** ist drehmomentübertragend, hier kraftschlüssig, mit der Verbrennerwelle **25** verbunden. Ein Bremsbetätigungsaktor **35,** ein Schlingband **11** und eine Schlingbandbefestigung **36** sind Bestandteil einer rotatorischen Bremse **10.** Die Darstellung zeigt die rotatorische Bremse **10** in einem aktivierten Zustand, wobei das Schlingband **11,** hier (optional) unmittelbar auf den Anker **5** einwirkt und somit die Ankerseite **8** gegenüber der Lagerseite **9** des Drehmoment-Axialkraft-Wandlers **7** (vergleiche Fig. 2 bis Fig. 4) abbremst. Das Schlingband **11** ist mit einem Ende mittels der Schlingbandbefestigung **36** fixiert, beispielsweise an einem stehenden Gehäuse (nicht dargestellt), und ist hier (optional) etwa anderthalbmal [1 ,5-mal] um den Anker **5** geführt. Am anderen Ende ist der Bremsbetätigungsaktor **35,** hier als einfahrender und ausfahrender Zylinder, bevorzugt elektrisch betätigbar, angeordnet. Bei aktivierter Bremse **10** ist der Zylinder eingefahren (hier darstellungsgemäß etwa nach rechts), bei deaktivierter Bremse **10** ist der Zylinder ausgefahren. Der Stellweg für einen solchen Bremsbetätigungsaktor **35** ist bezogen auf die Bremsleistung kurz. Die notwendigen Aktorkräfte gering. Damit ist ein energiearmes Schließen des Axialspalts **32** ermöglicht. Der Funktionszusammenhang mit des Drehmoment-Axialkraft-Wandlers **7** wird im Folgenden erläutert.

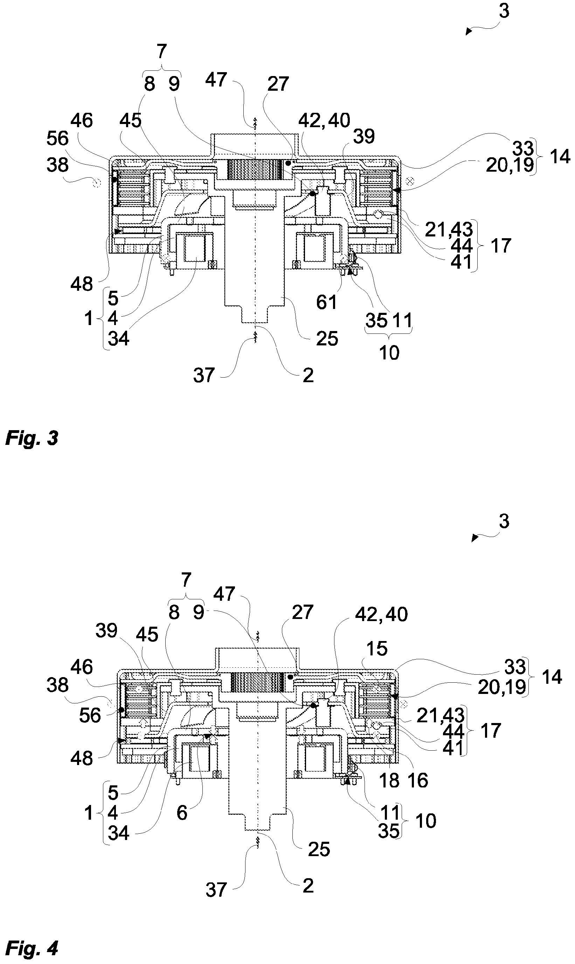

In Fig. 2 ist die Ausführungsform der Trennkupplung **3** gemäß Fig. 1 in einer Schnittansicht dargestellt, wobei die rotatorische Bremse **10** offen und die Magnetkupplung **1** deaktiviert ist. Es sei darauf hingewiesen, dass der Übersichtlichkeit halber einige Momente im Folgenden nicht mit einem üblichen Doppelpfeil dargestellt sind, sondern mittels eines Pfeilpaars, welche in einer gemeinsamen (hier horizontalen) Ebene jeweils einmal aus der Blattebene heraus zeigen und einmal in die Blattebene hinein zeigen. Es ist jeweils nur einer der beiden Pfeile mit einem Bezugszeichen gekennzeichnet. In der Darstellung oben ist zunächst eine Hauptkupplung **14** angeordnet, welche hier ein als Lamellenpaket **20** ausgeführtes Reibpaket **19** aufweist. In diesem (deaktivierten) Zustand weist die Magnetkupplung **1** einen Axialspalt **32** zwischen Stator **4** und Anker **5** auf. Somit ist ein mittels der Verbrennerwelle **25** (hier beispielsweise eine Zwischenwelle zwischen einem Zweimassenschwungrad und dem Trennkupplungseingang) übertragbares Verbrennerdrehmoment **37** von einer Übertragung auf die Rotorwelle **27** (schleppmomentfrei) getrennt. Ein Rotordrehmoment **38** ausgehend von einer elektrischen Antriebsmaschine **26** (vergleiche Fig. 12) ist mittels eines mitrotierenden Kupplungsdeckels **33,** welcher bei der in Fig. 1 bis Fig. 4 gezeigten Ausführungsform bevorzugt zugleich den Rotorträger bildet, dauerhaft an die Rotorwelle **27** übertragbar. In einer Ausführungsform ist ein weitere Schaltkupplung zwischen die Rotorwelle **27** und eine Getriebeeingangswelle (hier nicht dargestellt) zwischengeschaltet. Die Magnetkupplung **1** ist hier (optional) bei der Verbrennerwelle **25** angeordnet. Der Stator **4** ist mittels einer axial (und hier optional rotatorisch) fixierten Magnetspule **34** unter Leistungsbestromung magnetisierbar und rotiert mit der Verbrennerwelle **25** mit. Der Anker **5** ist mittels eines Drehmoment-Axialkraft-Wandlers **7** mit deren Ankerseite **8** (hier im Schnitt nicht zu sehen), hier mittels einer Mehrzahl von Blattfedern eingerichtet als Axialzugfedern, über deren Lagerseite **9** mit einem Blattfedertopf **39** mittels eines Blattfederniets **40** mitrotierend mit dem Rampensystem **17** beziehungsweise dessen (darstellungsgemäß unteren) zweiten Rampenring **41** verbunden. Der Blattfederniet **40** ist (optional) zugleich als Abstandsbolzenniet **42** eingerichtet und so ist der Axialspalt **32** zwischen dem Anker **5** und dem Stator **4** sicher eingestellt. Unmittelbar auf den Anker **5** wirkend ist die rotatorische Bremse **10** angeordnet. Das Rampensystem **17** umfasst einen ersten (hier darstellungsgemäß oberen) Rampenring **43,** den zweiten Rampenring **41** und (hier optional) eine Mehrzahl von Wälzkörpern **44** zwischen den beiden Rampenringen **43,41.** Der erste Rampenring **43** ist in den mitrotierenden Kupplungsdeckel **33** drehmomentübertragend eingehängt und bildet hier (optional) zugleich das Anpressmittel **21** für die Hauptkupplung **14,** indem der erste Rampenring **43** unmittelbar mit einer Innenlamelle **45** (hier ist pars-pro-toto die darstellungsgemäß oberste gekennzeichnet) des Reibpakets **19** in anpressbaren Kontakt zur Reibmomentübertragung angeordnet ist. Solange an dem zweiten Rampenring **41** keine Drehmomentdifferenz (beispielsweise das Rotordrehmoment **38** gegen Verbrennerdrehmoment **37**) anliegt, rotieren der erste Rampenring **43** und der zweite Rampenring **41** synchron. Dies ist hier mittels einer Spannfeder **56** (beispielsweise ausgeführt als Schraubendruckfeder ausgeführt) sichergestellt, welche hier (optional) zugleich zum Trennen des Reibpakets **19** (also zum Beabstanden der Lamellen **46,45**) eingerichtet ist. Damit wird keine axiale Betätigungskraft **18** auf das Reibpaket **19** der Hauptkupplung **14** erzeugt (vergleiche Fig. 4). Damit rotiert der Anker **5** mit dem mitrotierenden Kupplungsdeckel **33** synchron. Bei einem rein elektrischen Betrieb wird die Hauptkupplung **14** nicht verpresst und einzig die Außenlamellen **46** (hier ist pars-pro-toto die darstellungsgemäß oberste gekennzeichnet) des Reibpakets **19** der Hauptkupplung **14,** das Rampensystem **17** und der (von dem Stator **4** beabstandet gehaltene) Anker **5** werden mitrotiert. Die Verbrennerwelle **25** ist abgekoppelt und das Verbrennerdrehmoment **37** ist nicht an die Rotorwelle **27** und umgekehrt übertragbar. Das Getriebedrehmoment **47** entspricht also (in idealer vereinfachter Betrachtung) dem Rotordrehmoment **38.**

In dem hier dargestellten (deaktivierten) Zustand ist die rotatorische Bremse **10** offen (Bremsbetätigungsaktor **35** ausgefahren), und somit bildet das Schlingband **11** keinen, zumindest keinen kraftübertragenden, Kontakt mit dem Anker **5.** In der gezeigten Ausführungsform ist (optional) der Blattfedertopf **39** mittels eines Axiallagers **48,** hier als Nadellager oder Zylinderrollenlager ausgeführt, axial an dem mitrotierenden Kupplungsdeckel **33** abgestützt.

In Fig. 3 ist die Ausführungsform der Trennkupplung **3** gemäß Fig. 2 in der gleichen Schnittansicht dargestellt, wobei die rotatorische Bremse **10** geschlossen und der Axialspalt **32** (vergleiche Fig. 2) geschlossen ist. Die Magnetkupplung **1** ist beispielsweise deaktiviert, also nicht leistungsbestromt. In diesem (gebremsten) Zustand ist nun also der Anker **5** infolge der Bremswirkung (mittels des Bremsmoments **61**) des daran reibenden Schlingbands **11** im Vergleich zu dem Blattfedertopf **39,** und damit zu dem ersten Rampenring **43** des Rampensystems **17,** mit einem dem Rotordrehmoment **38** entgegenstehenden Bremsmoment **61** (Abbremsung des Ankers **5** in Richtung Stillstand, also drehrichtungsunabhängig) beaufschlagt. Dies bewirkt, dass aufgrund der Drehmomentdifferenz zwischen der Ankerseite **8** (hier im Schnitt nicht zu sehen) und der Lagerseite **9** der Drehmoment-Axialkraft-Wandler **7** sich axial aufstellt und so den Axialspalt **32** (hier darstellungsgemäß auf null) verkleinert. Dazu wird bevorzugt keine Magnetkraft **6** benötigt. Vielmehr ist es möglich, die Leistungsbestromung der Magnetkupplung **1** erst zu diesem Zeitpunkt hochzufahren, anstatt dass bereits die maximale Leistungsbestromung angelegt ist, allein um den Axialspalt **32** zu schließen. Dadurch ist eine Regelbarkeit der Hauptkupplung **14** erzielt. Nämlich ist die Leistungsbestromung der Magnetkupplung **1** entsprechend eines gewünschten Einrückverlaufs, und zwar bevorzugt mit einem zu dem Stromfluss proportionalen Einrückweg und/oder Anpresskraft, regelbar und nicht bereits eine Maximalkraft erzeugt, welche im vorbekannten Ausführungsformen trägheitsbedingt (Induktion) nicht ohne Weiteres rechtzeitig wieder abbaubar ist.

In Fig. 4 ist die Ausführungsform der Trennkupplung **3** gemäß Fig. 2 und Fig. 3 in der gleichen Schnittansicht dargestellt, wobei die rotatorische Bremse **10** wieder offen und der Axialspalt **32** (vergleiche Fig. 2) einzig mittels der Magnetkraft **6** der nun aktivierten, also leistungsbestromten, Magnetkupplung **1** geschlossen ist. In diesem (aktivierten) Zustand ist die rotatorische Bremse **10** (wieder) offen und es wird keine Bremswirkung auf den Anker **5** ausgeübt. Mittels der Magnetkraft **6** ist das Rampensystem **17** voll betätigbar und von einer minimalen Betätigungskraft **18** auf eine maximale Betätigungskraft **18** auf das Reibpaket **19** für ein sanftes Synchronisieren der Verbrennerwelle **25** zu der Rotorwelle **27** bis zu einer Übertragbarkeit eines Soll-Drehmoments **15** regelbar. Das Getriebedrehmoment **47** entspricht nun der Summe jeweils des gesamten Rotordrehmoments **38** und des Verbrennerdrehmoments **37.** Selbstverständlich ist das Rotordrehmoment **38** hier auf null reduzierbar oder sogar in ein Rekuperationsbetrieb mit einem entgegenstehenden Rotordrehmoment **38** betreibbar.

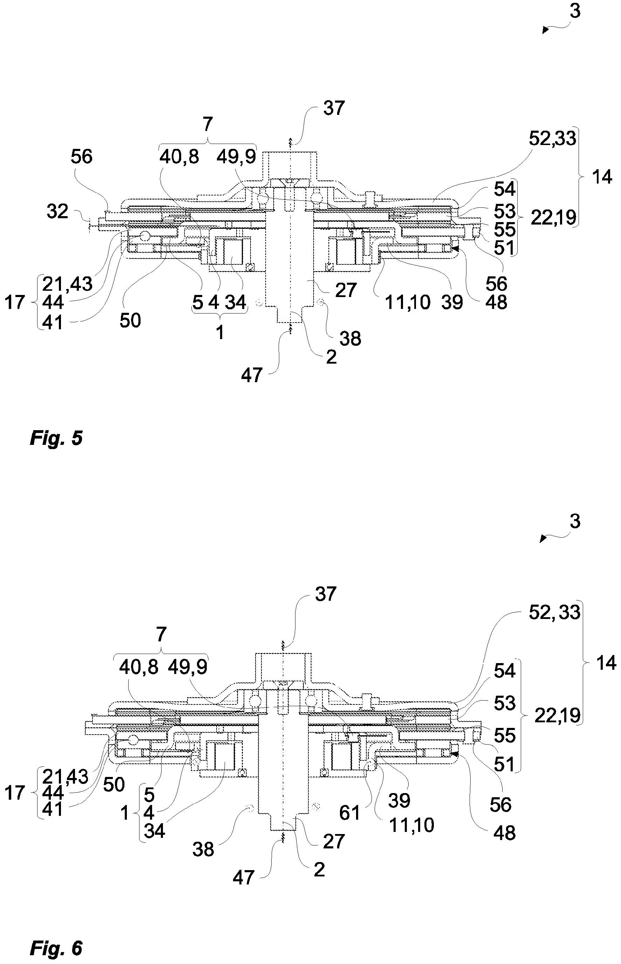

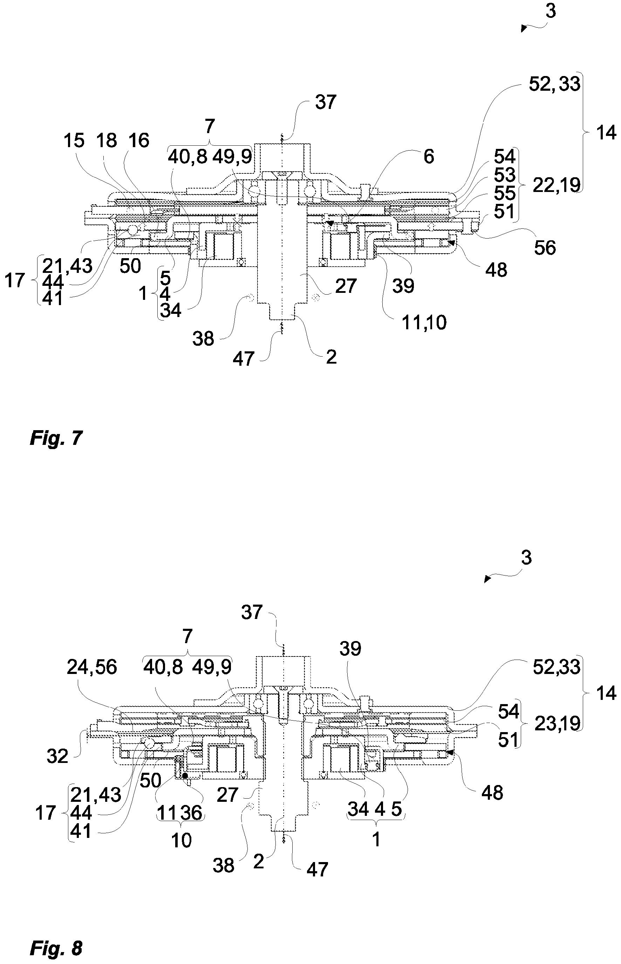

In Fig. 5 ist eine zweite Ausführungsform der Trennkupplung **3** in einer gleichen Schnittansicht wie in Fig. 2 dargestellt. Hier ist die zentrale Welle die Rotorwelle **27** und (darstellungsgemäß) oben ist der Anschluss für eine Verbrennerwelle **25** (vergleiche Fig. 12) gebildet. Diese zweite Ausführungsform der Trennkupplung **3** ist vom Wirkprinzip der Drehmomentübertragung ähnlich dem der ersten Ausführungsform der Trennkupplung **3** gemäß Fig. 1 bis Fig. 4. Es wird insoweit auf die vorhergehende Beschreibung zu Fig. 2 bis Fig. 4 verwiesen. In dieser zweiten Ausführungsform ist das Rotordrehmoment **38** von der Rotorwelle **27** unmittelbar, hier (optional) kraftschlüssig, an den Stator **4** übertragbar. Der Stator **4** ist mittels des Drehmoment-Axialkraft-Wandlers **7,** hier (optional) als Druckfedereinrichtung mit einer Mehrzahl von Blattfedern eingerichtet, mit dem Blattfedertopf **39** drehmomentübertragend verbunden. Der Blattfedertopf **39** ist mittels eines ersten Blattfederniets **40** bei der Ankerseite **8** und mittels eines zweiten Blattfederniet **49** bei der Lagerseite **9** mit dem Stator **4** fixiert. Der Blattfedertopf **39** wiederum ist in dem gezeigten Zustand axial derart versetzt zu dem Anker **5** angeordnet, dass eine Schaltscheibe **50,** welche axial an dem Anker **5** fixiert ist, den Anker **5** mit dem Axialspalt **32** von dem Stator **4** beabstandet hält. Der Anker **5** ist (vergleiche auch Fig. 6 und Fig. 7) hier (optional) mittels einer Verzahnung für eine Drehmomentübertragung relativ zu dem zweiten Rampenring **41** axial bewegbar mit dem zweiten Rampenring **41** verbunden. Das Schlingband **11** ist unmittelbar um den Blattfedertopf **39** gewickelt. Das Reibpaket **19** der Hauptkupplung **14** ist hier als Mehrscheibenpaket **22** ausgeführt, wobei der erste Rampenring **43** als Anpressplatte **51** das Anpressmittel **21** und der mitrotierende Kupplungsdeckel **33** die Gegenplatte **52** bildet. Axial zentral ist eine Zwischenplatte **53** zwischen einer ersten Reibscheibe **54** und einer zweiten Reibscheibe **55** angeordnet, sodass die beiden Reibscheiben **54,55** mittels des Rampensystems **17** zwischen den Platten **51,52,53** verpressbar sind. Der Anker **5** ist, hier optional formschlüssig, unmittelbar mit dem zweiten Rampenring **41** des Rampensystems **17** drehmomentübertragend verbunden.

In Fig. 6 ist die Trennkupplung **3** gemäß Fig. 5 im gebremsten Zustand gemäß Fig. 3 dargestellt. Die von dem Schlingband **11** ausgehende reibschlüssige Bremsung (Bremsmoment **61**) des Blattfedertopfs **39** stellt eine Drehmomentdifferenz zwischen dem Stator **4** und dem abgebremsten Blattfedertopf **39** ein, sodass der Drehmoment-Axialkraft-Wandler **7** sich axial zusammenzieht und den Anker **5** mittels der Schaltscheibe **50** somit geregelt gegen den Stator **4** drückt und den Axialspalt **32** (vergleiche Fig. 5) aufhebt.

In Fig. 7 ist die Trennkupplung **3** gemäß Fig. 5 und Fig. 6 im aktivierten Zustand gemäß Fig. 4 dargestellt. In diesem (aktivierten) Zustand ist die rotatorische Bremse **10** (wieder) offen und es wird keine Bremswirkung auf den Anker **5** ausgeübt. Mittels der Magnetkraft **6** ist das Rampensystem **17** nun voll betätigbar.

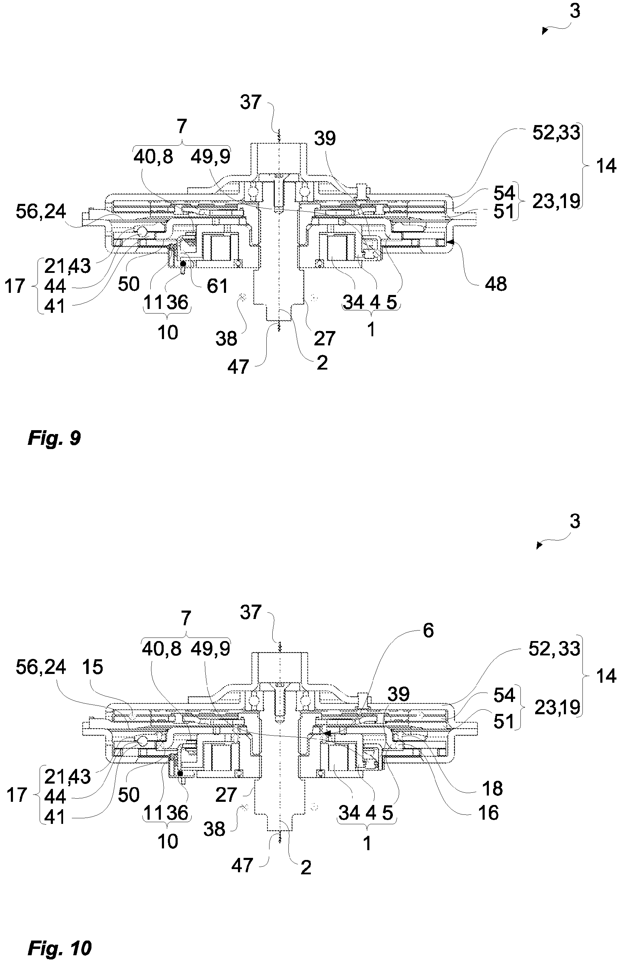

In Fig. 8 ist eine dritte Ausführungsform der Trennkupplung **3** in einer gleichen Schnittansicht wie in Fig. 2 und Fig. 5 dargestellt. Hier ist die zentrale Welle die Rotorwelle **27** und (darstellungsgemäß) oben ist der Anschluss für eine Verbrennerwelle **25** (vergleiche Fig. 12) gebildet. Diese dritte Ausführungsform der Trennkupplung **3** ist vom Wirkprinzip der Drehmomentübertragung ähnlich dem der zweiten Ausführungsform der Trennkupplung **3** gemäß Fig. 5 bis Fig. 7. Es wird insoweit auf die vorhergehende Beschreibung zu Fig. 2 bis Fig. 4, sowie Fig. 5 bis Fig. 7 verwiesen. In dieser zweiten Ausführungsform ist das Rotordrehmoment **38** von der Rotorwelle **27** unmittelbar, hier (optional) kraftschlüssig, an den Stator **4** übertragbar. Der Stator **4** ist mittels des Drehmoment-Axialkraft-Wandlers **7,** hier (optional) als Druckfedereinrichtung mit einer Mehrzahl von Blattfedern eingerichtet, mit dem Blattfedertopf **39** drehmomentübertragend verbunden. Der Blattfedertopf **39** ist mittels eines ersten Blattfederniets **40** bei der Ankerseite **8** mit dem Blattfedertopf **39** und mittels eines zweiten Blattfederniet **49** bei der Lagerseite **9** mit dem Stator **4** fixiert. Der Blattfedertopf **39** wiederum ist in dem gezeigten Zustand axial derart versetzt zu dem Anker **5** angeordnet, dass eine Schaltscheibe **50,** welche axial an dem Anker **5** fixiert ist, den Anker **5** mit dem Axialspalt **32** von dem Stator **4** beabstandet hält. Der Anker **5** ist (vergleiche auch Fig. 9 und Fig. 10) hier (optional) mittels einer Verzahnung für eine Drehmomentübertragung relativ zu dem zweiten Rampenring **41** axial bewegbar mit dem zweiten Rampenring **41** verbunden. Das Schlingband **11** ist unmittelbar um den Blattfedertopf **39** gewickelt. Das Reibpaket **19** der Hauptkupplung **14** ist hier als Einscheibenpaket **23** ausgeführt, wobei der erste Rampenring **43** mittels einer Betätigungsfeder **24,** beispielsweise eine sogenannte Hebelfeder, auf eine (separate) Anpressplatte **51** und der mitrotierende Kupplungsdeckel **33** die Gegenplatte **52** bildet. Axial zentral ist eine (erste und einzige) Reibscheibe **54** angeordnet, sodass die Reibscheibe **54** mittels des Rampensystems **17** zwischen den Platten **51,52** verpressbar ist. Der Anker **5** ist, hier optional formschlüssig, unmittelbar mit dem zweiten Rampenring **41** des Rampensystems **17** drehmomentübertragend verbunden. Hier ist die Schlingbandbefestigung **36** zu sehen.

In Fig. 9 ist die Trennkupplung **3** gemäß Fig. 8 im gebremsten Zustand gemäß Fig. 6 dargestellt. Die von dem Schlingband **11** ausgehende reibschlüssige Bremsung (Bremsmoment **61)** des Blattfedertopfs **39** stellt eine Drehmomentdifferenz zwischen dem Stator **4** und dem abgebremsten Blattfedertopf **39** ein, sodass der Drehmoment-Axialkraft-Wandler **7** sich axial zusammenzieht und den Anker **5** mittels der Schaltscheibe **50** somit geregelt gegen den Stator **4** drückt und den Axialspalt **32** (vergleiche Fig. 8) aufhebt.

In Fig. 10 ist die Trennkupplung **3** gemäß Fig. 8 und Fig. 9 im aktivierten Zustand gemäß Fig. 7 dargestellt. In diesem (aktivierten) Zustand ist die rotatorische Bremse **10** (wieder) offen und es wird keine Bremswirkung auf den Anker **5** ausgeübt. Mittels der Magnetkraft **6** ist das Rampensystem **17** nun voll betätigbar.

In Fig. 11 ist eine Ausführungsform eines Schließverfahrens ausgeführt mit einer Trennkupplung **3,** wie beispielsweise in den vorhergehenden Figuren dargestellt, in einem Flussdiagramm dargestellt. In einem Schritt **a.** wird die rotatorische Bremse **10** geschlossen, sodass mittels eines Bremsmoments **61** ein relatives Verdrehen zwischen der Ankerseite **8** und der Lagerseite **9** des Drehmoment-Axialkraft-Wandlers **7** und damit eine Axialbewegung des Drehmoment-Axialkraft-Wandlers **7** bewirkt wird und damit der Axialspalt **32** geschlossen wird. In einem Schritt **b.** wird die Magnetkupplung **1** beziehungsweise die Spule zum Erzeugen der Magnetkraft **6** (leistungs-) bestromt. Diese Ansteuerung der Magnetkupplung **1** wird bevorzugt erst nach einem vollständigen Schließen des Axialspalts **32** mittels der rotatorischen Bremse **10** gemäß Schritt a. durchgeführt. Alternativ wird Schritt **b.** (mit gestrichelter Linie dargestellt) bereits früher, also zeitlich überschneidend mit Schritt **a.,** zum Unterstützen des Schließvorgangs des Axialspalts **32** ausgeführt. Sobald eine ausreichende Magnetkraft **6** zum Halten des Ankers **5** an dem Stator **4** erzeugt ist, wird in Schritt **c.** die rotatorische Bremse **10** geöffnet und der Anker **5** einzig mittels der Magnetkraft **6** an dem Stator **4** gehalten. Der Axialspalt **32** ist bevorzugt bereits vollständig geschlossen, wenn Schritt **c.** ausgeführt wird. Alternativ wird ein verbleibender (axialer) Restweg einzig von der Magnetkraft **6** geschlossen. In einem anschließenden Schritt d. wird (optional) die Leistungsbestromung gesteigert, um die Anpresskraft mittels des Rampensystems **17** sanft zu steigern. In diesem Falle ist die Magnetkraft **6** in Schritt b. noch nicht groß genug, um das gewünschte Soll-Drehmoment **15** zu übertragen, bevorzugt noch nicht groß genug, um ein ausreichendes Vorsteuerdrehmoment **16** auf das Rampensystem **17** zu übertragen, um die Gegenkraft der Spannfeder **56** zu überwinden, sodass dann also kein oder nur ein in dem Hybrid-Antriebsstrang **13** vernachlässigbares Schleppmoment auf die Verbrennerwelle **25** (vergleiche Fig. 12) übertragbar ist.

In Fig. 12 ist ein Kraftfahrzeug **31** mit einem Hybrid-Antriebsstrang **13** (optional vor der Fahrerkabine **57** und optional in Queranordnung, also mit der Motorachse **58** quer zu der Längsachse **59** des Kraftfahrzeugs **31**) in schematischer Ansicht von oben gezeigt. Hier ist die Vorderachse, und damit das linke Vortriebsrad **29** und das zweite Vortriebsrad **30,** von dem Hybrid-Antriebsstrang **13** angetrieben. Die Hinterachse ist mitlaufend ausgeführt oder ebenfalls (Allrad) oder alternativ von dem Hybrid-Antriebsstrang **13** angetrieben. Der Hybrid-Antriebsstrang **13** umfasst eine Verbrennungskraftmaschine **12** und eine elektrische Antriebsmaschine **26,** wobei hier (optional) die elektrische Antriebsmaschine **26** in ein Hybridmodul **60** integriert ist. Beide Antriebsmaschinen **26,12** sind mittels eines Getriebes **28,** beispielsweise ein Umschlingungsgetriebe, mit den Vortriebsrädern **29,30** drehmomentübertragend verbunden. In dieser Ausführungsform ist dazu die Verbrennerwelle **25** mittels der Rotorwelle **27** der elektrischen Antriebsmaschine **26** mit dem Getriebe **28** mittels der (hier in dem Hybridmodul **60** enthaltenen) Trennkupplung **3** lösbar verbunden.

Mit der hier vorgeschlagenen Magnetkupplung ist eine Vorsteuerkupplung für eine Trennkupplung geschaffen, welche einen regelbaren Stellweg aufweist.

**Bezugszeichenliste**

| | | | |
|---|---|---|---|
| 1 | Magnetkupplung | 32 | Axialspalt |
| 2 | Rotationsachse | 33 | mitrotierender Kupplungsdeckel |
| 3 | Trennkupplung | 34 | Magnetspule |
| 4 | Stator | 35 | Bremsbetätigungsaktor |
| 5 | Anker | 36 | Schlingbandbefestigung |
| 6 | Magnetkraft | 37 | Verbrennerdrehmoment |
| 7 | Drehmoment-Axialkraft-Wandler | 38 | Rotordrehmoment |
| 8 | Ankerseite | 39 | Blattfedertopf |
| 9 | Lagerseite | 40 | erster Blattfederniet |
| 10 | rotatorische Bremse | 41 | zweiter Rampenring |
| 11 | Schlingband | 42 | Abstandsbolzenniet |
| 12 | Verbrennungskraftmaschine | 43 | erster Rampenring |
| 13 | Hybrid-Antriebsstrang | 44 | Wälzkörper |
| 14 | Hauptkupplung | 45 | Innenlamelle |
| 15 | Soll-Drehmoment | 46 | Außenlamelle |
| 16 | Vorsteuerdrehmoment | 47 | Getriebedrehmoment |
| 17 | Rampensystem | 48 | Axiallager |
| 18 | Betätigungskraft | 49 | zweiter Blattfederniet |
| 19 | Reibpaket | 50 | Schaltscheibe |
| 20 | Lamellenpaket | 51 | Anpressplatte |
| 21 | Anpressmittel | 52 | Gegenplatte |
| 22 | Mehrscheibenpaket | 53 | Zwischenplatte |
| 23 | Einscheibenpaket | 54 | (erste) Reibscheibe |
| 24 | Betätigungsfeder | 55 | zweite Reibscheibe |
| 25 | Verbrennerwelle | 56 | Spannfeder |
| 26 | elektrische Antriebsmaschine | 57 | Fahrerkabine |
| 27 | Rotorwelle | 58 | Motorachse |
| 28 | Getriebe | 59 | Längsachse |
| 29 | linkes Vortriebsrad | 60 | Hybridmodul |
| 30 | rechtes Vortriebsrad | 61 | Bremsmoment |
| 31 | Kraftfahrzeug | | |

## Patentansprüche

1. Magnetkupplung (1) mit einer Rotationsachse (2) zum Betätigen einer Trennkupplung (3), aufweisend zumindest die folgenden Komponenten:
- einen axial fixierten Stator (4);
- einen axial bewegbaren Anker (5), wobei mittels einer Magnetkraft (6) infolge eines Leistungsbestromens der Anker (5) axial an dem Stator (4) haltbar ist; und
- einen Drehmoment-Axialkraft-Wandler (7) mit einer Ankerseite (8) und mit einer Lagerseite (9) antagonistisch zu der Magnetkraft (6) wirkend, mittels welcher der Anker (5) von dem Stator (4) axial beabstandet gehalten ist,
**dadurch gekennzeichnet, dass**
weiterhin eine rotatorische Bremse (10) vorgesehen ist, mittels welcher eine Drehzahldifferenz zwischen der Ankerseite (8) und der Lagerseite (9) des Drehmoment-Axialkraft-Wandlers (7) bewirkbar ist.

2. Magnetkupplung (1) nach Anspruch 1, wobei
die rotatorische Bremse (10) ein Schlingband (11) umfasst, wobei bevorzugt das Schlingband (11) unmittelbar mit dem Anker (5) reibschlüssig drehmomentübertragend verbindbar ist.

3. Trennkupplung (3) für eine Verbrennungskraftmaschine (12) in einem Hybrid-Antriebsstrang (13), aufweisend zumindest die folgenden Komponenten:
- eine Hauptkupplung (14) zum trennbaren Übertragen eines vorbestimmten Soll-Drehmoments (15);
- eine Magnetkupplung (1) nach Anspruch 1 oder 2 zum steuerbaren Übertragen eines Vorsteuerdrehmoments (16) für die Hauptkupplung (14); und
- ein Rampensystem (17) zum Umwandeln des Vorsteuerdrehmoments (16) in eine axiale Betätigungskraft (18),
wobei mittels der Betätigungskraft (18) des Rampensystems (17) die Hauptkupplung (14) schließbar ist.

4. Trennkupplung (3) nach Anspruch 3, wobei
die Hauptkupplung (14) ein Reibpaket (19) umfasst, welches gemäß einer der folgenden Konfigurationen ausgeführt ist:
- als ein Lamellenpaket (20), bevorzugt mit dem Rampensystem (17) als unmittelbar auf das Lamellenpaket (20) einwirkendes Anpressmittel (21);
- als ein Mehrscheibenpaket (22), bevorzugt mit dem Rampensystem (17) als unmittelbar auf das Mehrscheibenpaket (22) einwirkendes Anpressmittel (21); und
- als ein Einscheibenpaket (23), bevorzugt mit einer Betätigungsfeder (24) zwischen dem Rampensystem (17) und dem Einscheibenpaket (23).

5. Hybrid-Antriebsstrang (13), aufweisend zumindest die folgenden Komponenten:
- eine Verbrennungskraftmaschine (12) mit einer Verbrennerwelle (25);
- eine elektrische Antriebsmaschine (26) mit einer Rotorwelle (27);
- ein Getriebe (28) zum drehmomentübertragenden Verbinden der Verbrennerwelle (25) und/oder der Rotorwelle (27) mit einem Verbraucher (29,30);
- eine Trennkupplung (3) nach Anspruch 3 oder 4,
wobei die Trennkupplung (3) zwischen der Rotorwelle (27) und der Verbrennerwelle (25) angeordnet ist und die Verbrennungskraftmaschine (12) über die Trennkupplung (3) von der elektrischen Antriebsmaschine (26) anlassbar ist.

6. Kraftfahrzeug (31), aufweisend
zumindest eine Vortriebsrad (29,30) zum Vortrieb des Kraftfahrzeugs (31) und einen Hybrid-Antriebsstrang (13) nach Anspruch 5,
wobei das zumindest eine Vortriebsrad (29,30) mittels des Hybrid-Antriebsstrangs (13) mit einem Drehmoment zum Vortrieb des Kraftfahrzeugs (31) steuerbar versorgbar ist.

7. Schließverfahren zum gesteuerten Schließen einer Trennkupplung (3) nach Anspruch 3 oder 4, das Schließverfahren umfassend zumindest die folgenden Schritte in der genannten Reihenfolge:
**a.** Schließen der rotatorischen Bremse (10), sodass ein relatives Verdrehen zwischen der Ankerseite (8) und der Lagerseite (9) des Drehmoment-Axialkraft-Wandlers (7) bewirkt ist und damit eine Axialbewegung des Drehmoment-Axialkraft-Wandlers (7);
**b.** Leistungsbestromen der Magnetkupplung (1) zum Erzeugen der Magnetkraft (6), bevorzugt nach einem vollständigen Schließen des Axialspalts (32) mittels der rotatorischen Bremse (10) gemäß Schritt **a.;**
**c.** nach Schritt **b.**, Öffnen der rotatorischen Bremse (10) und Halten des Ankers (5) an dem Stator (4) mittels der Magnetkraft (6),
wobei bevorzugt die Magnetkraft (6) zwischen einer rein haltenden Minimalkraft und einer dem Soll-Drehmoment (15) entsprechenden Maximalkraft derart regelbar ist, dass die Hauptkupplung (14) schlupfend betreibbar ist.

## Claims

1. A magnetic clutch (1) having an axis of rotation (2) for actuating a disconnect clutch (3), having at least the following components:
- an axially fixed stator (4);
- an axially movable armature (5), wherein the armature (5) is axially retainable on the stator (4) by means of a magnetic force (6) caused by a supply of power; and
- a torque-axial force converter unit (7) having an armature side (8) and a bearing side (9) acting in an antagonistic manner to the magnetic force (6), by means of which the armature (5) is held at an axial distance from the stator (4),
**characterised in that**
a rotary brake (10) is further provided, by means of which a difference in the rotational speed between the armature side (8) and the bearing side (9) of the torque-axial force converter unit (7) can be effected.

2. The magnetic clutch (1) according to claim 1, wherein
the rotary brake (10) comprises a looped belt (11), wherein the looped belt (11) is preferably frictionally connected directly to the armature (5) in a torque-transmitting manner.

3. A disconnect clutch (3) for an internal combustion engine (12) in a hybrid vehicle (13), having at least the following components:
- a main clutch (14) for separable transmission of a predetermined target torque (15);
- a magnetic clutch (1) according to claim 1 or 2 for controllable transmission of a pilot torque (16) for the main clutch (14); and
- a ramp system (17) for converting the pilot torque (16) into an axial actuation force (18), wherein the main clutch (14) is closable by means of the actuation force (18) of the ramp system (17).

4. The disconnect clutch (3) according to claim 3, wherein
the main clutch (14) comprises a friction stack (19) designed according to one of the following configurations:
- as a plate stack (20), preferably with the ramp system (17) as the pressing means (21) acting directly on the plate stack (20);
- as a multi-disk stack (22), preferably with the ramp system (17) as the pressing means (21) acting directly on the multi-disk stack (22); and
- as a single-disk stack (23), preferably with an actuating spring (24) between the ramp system (17) and the single-disk stack (23).

5. A hybrid drive train (13), having at least the following components:
- an internal combustion engine (12) having an internal combustion engine shaft (25);
- an electric drive machine (26) having a rotor shaft (27);
- a transmission (28) for torque-transmitting connection of the internal combustion engine shaft (25) and/or the rotor shaft (27) to a consumer (29, 30);
- a disconnect clutch (3) according to claim 3 or 4,
wherein the disconnect clutch (3) is arranged between the rotor shaft (27) and the internal combustion engine shaft (25) and the internal combustion engine (12) can be started by the electric drive motor (26) via the disconnect clutch (3).

6. A motor vehicle (31), having
at least one drive wheel (29, 30) for propelling the motor vehicle (31) and a hybrid drive train (13) according to claim 5,
wherein the at least one drive wheel (29, 30) can be controllably supplied with a torque for propelling the motor vehicle (31) by means of the hybrid drive train (13).

7. A closing method for the controlled closing of a disconnect clutch (3) according to claim 3 or 4, the closing method comprising at least the following steps in the order listed:
**a.** closing the rotary brake (10) to effect a relative rotation between the armature side (8) and the bearing side (9) of the torque-axial force converter unit (7) and thus an axial movement of the torque-axial force converter unit (7);
**b.** supplying power to the magnetic clutch (1) to generate the magnetic force (6), preferably after a complete closing of the axial gap (32) by means of the rotary brake (10) according to step **a.;**
**c.** after step **b.,** opening the rotary brake (10) and holding the armature (5) on the stator (4) by means of the magnetic force (6),
wherein preferably the magnetic force (6) can be adjusted between a purely holding minimum force and a maximum force corresponding to the predetermined target torque (15), so that the main clutch (14) can be slip-operated.

## Revendications

1. Embrayage magnétique (1) comportant un axe de rotation (2) permettant d'actionner un embrayage de coupure (3), présentant au moins les composants suivants :
- un stator (4) fixé axialement ;
- une armature (5) mobile axialement, dans lequel l'armature (5), au moyen d'une force magnétique (6) résultant d'une alimentation en courant de puissance, peut être maintenue axialement sur le stator (4) ; et
- un convertisseur de force axiale et de couple (7) comportant un côté armature (8) et un côté palier (9) agissant de manière antagoniste à la force magnétique (6), au moyen duquel l'armature (5) est maintenue axialement espacée du stator (4),
**caractérisé en ce que**
en outre, un frein (10) rotatif est prévu, au moyen duquel une différence de vitesse de rotation peut être provoquée entre le côté armature (8) et le côté palier (9) du convertisseur de force axiale et de couple (7).

2. Embrayage magnétique (1) selon la revendication 1, dans lequel
le frein (10) rotatif comprend une bande d'enroulement (11), dans lequel la bande d'enroulement (11) peut, de préférence, être reliée directement, par friction, de manière transmettant le couple, à l'armature (5).

3. Embrayage de coupure (3) pour un moteur à combustion interne (12) dans une chaîne cinématique hybride (13), présentant au moins les composants suivants :
- un embrayage principal (14) permettant de transmettre de manière séparable un couple de consigne (15) prédéterminé ;
- un embrayage magnétique (1) selon la revendication 1 ou 2 permettant de transmettre de manière commandable un couple pilote (16) pour l'embrayage principal (14) ; et
- un système de rampe (17) permettant de transformer le couple pilote (16) en une force d'actionnement (18) axiale,
dans lequel l'embrayage principal (14) peut être fermé au moyen de la force d'actionnement (18) du système de rampe (17).

4. Embrayage de coupure (3) selon la revendication 3, dans lequel
l'embrayage principal (14) comprend un paquet de friction (19), lequel est conçu selon l'une des configurations suivantes :
- en tant que paquet de lamelles (20), de préférence comportant le système de rampe (17) en tant que moyen de pression (21) agissant directement sur le paquet de lamelles (20) ;
- en tant que paquet de disques multiples (22), de préférence comportant le système de rampe (17) en tant que moyen de pression (21) agissant directement sur le paquet de disques multiples (22) ; et
- en tant que paquet de disque simple (23), de préférence comportant un ressort d'actionnement (24) entre le système de rampe (17) et le paquet de disque simple (23).

5. Chaîne cinématique hybride (13) présentant au moins les composants suivants :
- un moteur à combustion interne (12) comportant un arbre de moteur à combustion (25) ;
- un moteur d'entraînement (26) électrique comportant un arbre de rotor (27) ;
- une boîte de vitesse (28) destinée à la liaison permettant la transmission de couple de l'arbre de moteur à combustion (25) et/ou de l'arbre de rotor (27) à un consommateur (29, 30) ;
- un embrayage de coupure (3) selon la revendication 3 ou 4,
dans laquelle l'embrayage de coupure (3) est agencé entre l'arbre de rotor (27) et l'arbre de moteur à combustion (25) et le moteur à combustion interne (12) peut être démarré, à l'aide de l'embrayage de coupure (3), par le moteur d'entraînement (26) électrique.

6. Véhicule automobile (31), présentant
au moins une roue de propulsion (29, 30) destinée à la propulsion du véhicule automobile (31) et une chaîne cinématique hybride (13) selon la revendication 5,
dans lequel l'au moins une roue de propulsion (29, 30) peut être alimentée de manière commandée, au moyen de la chaîne cinématique hybride (13), avec un couple pour propulser le véhicule automobile (31).

7. Procédé de fermeture permettant de fermer de manière commandée un embrayage de coupure (3) selon la revendication 3 ou 4, le procédé de fermeture comprenant au moins les étapes suivantes dans l'ordre mentionné :
**a.** la fermeture du frein (10) rotatif de telle sorte qu'une rotation relative entre le côté armature (8) et le côté palier (9) du convertisseur de force axiale et de couple (7) est provoquée et, par conséquent, un déplacement axial du convertisseur de force axiale et de couple (7) ;
**b.** l'alimentation en courant de puissance de l'embrayage magnétique (1) pour la génération de la force magnétique (6), de préférence après une fermeture complète d'une fente (32) axiale au moyen du frein (10) rotatif selon l'étape **a.** ;
**c.** après l'étape **b.,** l'ouverture du frein (10) rotatif et le maintien de l'armature (5) sur le stator (4) au moyen de la force magnétique (6),
dans lequel, de préférence, la force magnétique (6) est réglable entre une force minimale de maintien pur et une force maximale correspondant au couple de consigne (15) de telle sorte que l'embrayage principal (14) peut être actionné de manière glissante.
